# EUROPÄISCHE PATENTANMELDUNG

(11) **EP 1 535 522 A1**
(43) Veröffentlichungstag der Anmeldung: **01.06.2005**
(21) Anmeldenummer: 04024729.8
(22) Anmeldetag: 16.10.2004
(51) Int. Cl.: A24B 3/08, B65G 11/14

(54) **Rutscheinrichtung für einen Tabakzwischenspeicher**

(30) Priorität: 25.11.2003 DE 10355394
(71) Anmelder: Hauni Primary GmbH, 21033 Hamburg (DE)
(72) Erfinder: Burfeind, Kai, 21684 Agathenburg (DE); Christ, Horst-Udo, 22359 Hamburg (DE); Dierken, Hans, 21385 Amelinghausen (DE)
(74) Vertreter: Seemann, Ralph, Dr. Dipl.-Phys.

(57) **Zusammenfassung**

Die Erfindung betrifft eine Einrichtung zum Befüllen eines Zwischenspeichers (ZS) mit Tabak (15) mit einer Fördereinrichtung (10) zum Fördern des Tabaks (15) zum Zwischenspeicher (ZS).

Die Einrichtung wird dadurch weitergebildet, dass eine Rutscheinrichtung (20) zum Einbringen des Tabaks (15) in den Zwischenspeicher (ZS) vorgesehen ist.

## Beschreibung

Die Erfindung betrifft eine Einrichtung zum Befüllen eines Zwischenspeichers mit Tabak, umfassend eine Fördereinrichtung zum Fördern des Tabaks zum Zwischenspeicher.

In der Tabakaufbereitung werden Mischanlagen für Strips, Zigarreneinlagen, Rippen, Rippenschnitt und Schnitttabak eingesetzt, die homogene Tabakmischungen bei hoher Mischungstreue liefern. Die Tabakverteilung erfolgt in horizontalen Lagen gleichmäßig über die volle Länge und Breite einer Mischbox. Dabei wird Tabak über eine Schwingförderrinne mit schrägem Auslauf auf die Breite eines Mischfahrbands und von dort auf die Breite der Mischbox verteilt. Alternativ wird der Tabak über ein Schrittfahrband in Strängen auf ein Mischfahrband und in die Mischbox gefördert. Das Schrittfahrband wird in Abhängigkeit des Mischfahrbands über ein Zeitrelais gesteuert.

Aus DE-OS 2 024 513 ist eine Vorrichtung zum Beschicken eines Zwischenspeichers mit gleichmäßigen Tabakschichten bekannt. Eine weitere Vorrichtung zum Einbringen von Tabakblättern in Mischbehältern ist in DE-PS 612 588 beschrieben. Darüber hinaus sind aus DE-C-197 49 933 eine Vorrichtung und ein Verfahren zum Beschicken eines Zwischenspeichers bekannt.

Ausgehend von diesem Stand der Technik ist es Aufgabe der vorliegenden Erfindung, auf schonende Weise den Tabak in einen Zwischenspeicher einzubringen, wobei es möglich sein soll, die Staubentwicklung während des Befüllvorgangs zu verringern.

Die Aufgabe wird gelöst mittels einer Einrichtung zum Befüllen eines Zwischenspeichers mit Tabak, umfassend eine Fördereinrichtung zum Fördern des Tabaks zum Zwischenspeicher, die dadurch weitergebildet wird, dass eine Rutscheinrichtung zum Einbringen des Tabaks in den Zwischenspeicher vorgesehen ist. Durch die erfindungsgemäße Rutscheinrichtung wird erreicht, dass der Tabak sanft auf den Boden des Zwischenspeichers abgelegt wird. Darüber hinaus wird erreicht, dass durch die Rutscheinrichtung der Tabak gezielt an vorbestimmte Bereiche des Zwischenspeichers, mit einer geringen Staubentwicklung transportiert wird.

Um ein schonendes Einbringen des Tabaks in den Zwischenspeicher zu ermöglichen, ist die Rutscheinrichtung im Abwurfbereich des Tabaks von der Fördereinrichtung angeordnet.

Außerdem ist es bevorzugt, wenn die Rutscheinrichtung dem Abwurfbereich der Fördereinrichtung beabstandet gegenüber angeordnet ist.

Gemäß einer vorteilhaften Ausführungsform ist die Rutscheinrichtung schwenkbar ist, um den Tabak gleichförmig im Zwischenspeicher zu verteilen.

Wenn zudem der Zwischenspeicher für den Tabak bis zu einem gewissen Grad gefüllt ist, ist es vorteilhaft, wenn die Rutscheinrichtung in ihrer Länge verstellbar und/oder einstellbar ist, so dass die Rutscheinrichtung an den Füllstand des Zwischenspeichers angepasst werden kann und der Zwischenspeicher bis zur Füllhöhe des Zwischenspeichers gefüllt wird.

Hierzu ist es günstig, wenn die Rutscheinrichtung teleskopierbar ist.

Bevorzugterweise weist die Rutscheinrichtung mehrere, insbesondere flächenartig ausgebildete, Rutschsegmente auf, die ein sanftes Gleiten des Tabaks in den Zwischenspeicher ermöglichen und gleichzeitig auf den Füllstand des Zwischenspeichers anpassbar sind.

Vorteilhafterweise ist außerdem vorgesehen, dass die Rutscheinrichtung gegen die Förderrichtung des Tabaks geneigt ausgebildet ist, so dass die Rutscheinrichtung im unteren Bereich zur Fördereinrichtung gerichtet ist.

Darüber hinaus ist gemäß einer vorteilhaften Weiterbildung der Erfindung vorgesehen, dass an der Fördereinrichtung eine Leiteinrichtung für den abgeworfenen Tabak vorgesehen ist, so dass der von der Fördereinrichtung transportierte und abgeworfene Tabak vollständig der Rutscheinrichtung zugefördert werden kann.

In einer bevorzugten Ausführungsform weist die Rutscheinrichtung einen Neigungswinkel zwischen 0° und 30° auf, so dass der Tabak auf der Rutscheinrichtung schonend in den Zwischenspeicher eingebracht wird.

Insbesondere ist die Leiteinrichtung als gegen die Rutscheinrichtung gerichtetes, geneigtes Flächenelement ausgebildet.

Wenn die Fördereinrichtung und die Rutscheinrichtung als Einheit ausgebildet sind, wird dadurch erreicht, dass die Fördereinrichtung und die Rutscheinrichtung gemeinsam verfahrbar sind, so dass der Tabak gleichmäßig über die gesamte Fläche des Zwischenspeichers abgelegt werden kann. Insgesamt ergibt sich auch dadurch eine verbesserte Handhabbarkeit.

Vorteilhafterweise sind die Fördereinrichtung und/oder die Rutscheinrichtung verfahrbar, um den Zwischenspeicher vollständig mit Tabak zu befüllen.

Die Aufgabe wird ferner gelöst durch die Verwendung einer voranstehend beschriebenen erfindungsgemäßen Rutscheinrichtung zum Einbringen von Tabak in einen Zwischenspeicher in einer Einrichtung zum Befüllen des Zwischenspeichers mit Tabak, umfassend eine Fördereinrichtung zum Fördern des Tabaks zum Zwischenspeicher. Zur Vermeidung von Wiederholungen wird auf die obigen Ausführungen zur Rutscheinrichtung ausdrücklich verwiesen.

Nachfolgend wird der Gegenstand der Erfindung anhand eines Ausführungsbeispiels exemplarisch und ohne Beschränkung des allgemeinen Erfindungsgedankens beschrieben, wobei für alle im Text nicht näher beschriebenen erfindungsgemäßen Einzelheiten ausdrücklich auf die Zeichnung verwiesen wird. Es zeigt:

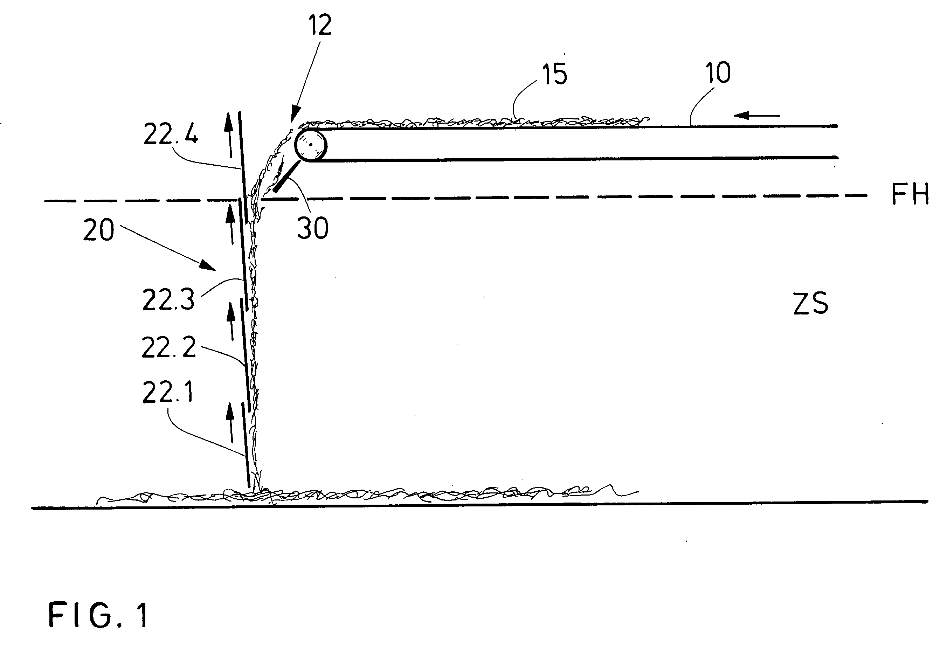

- Fig. 1: schematisch in einer Seitenansicht eine erfindungsgemäße Einrichtung zum Befüllen eines Zwischenspeichers mit Tabak.

Mittels eines Förderbandes 10 wird Tabak 15 in den Bereich eines Zwischenspeichers ZS gefördert. Der Zwischenspeicher ZS kann als Mischbox ausgebildet sein. Die maximale Füllhöhe des Zwischenspeichers ZS ist gestrichelt eingezeichnet und mit FH bezeichnet.

Der Tabak 15 wird in einem Abwurfbereich 12 vom Förderband 10 abgeworfen. Hierbei prallt der Tabak auf eine Rutsche 20 und gleitet entlang dieser Rutsche 20 auf den Boden des Zwischenspeichers ZS.

Die Rutsche 20 besteht aus mehreren, insbesondere flächenartig ausgebildeten, Rutschsegmenten 22.1 bis 22.4, die schuppenartig übereinander angeordnet sind. Außerdem sind die Rutschsegmente 22.1 bis 22.4 teleskopartig bewegbar, so dass die Rutsche 20 in ihrer Länge bzw. Höhe variabel anpassbar ist. Bei einem höheren Befüllungsgrad werden die Rutschsegmente 22.1. bis 22.4 ineinander verschoben und die Länge der Rutsche 20 verkürzt, so dass die Rutsche 20, insbesondere automatisch, auf den Füllstand des Zwischenspeichers ZS angepasst wird oder ist. Um eine automatische Anpassung der Höhe bzw. der Länge der Rutsche 20 zu erreichen, sind Antriebe für die einzelnen Rutschsegmente 22.1 bis 22.4 vorgesehen.

Der vom Förderband 10 abgeworfene Tabak 15 wird insbesondere dann sanft in den Zwischenspeicher ZS geleitet, wenn die Rutsche 20 mit einem geringen Neigungswinkel angeordnet ist. Vorzugsweise beträgt der Neigungswinkel etwa 10°. In einer alternativen Ausführung ist die Rutscheinrichtung schwenkbar, so dass durch die Schwenkbarkeit der Rutscheinrichtung der Tabak gleichmäßig im Zwischenspeicher verteilt wird.

Neben einer schonenden Zuführung des Tabaks 15 in den Zwischenspeicher ZS wird gleichzeitig auch eine Verringerung in der Staubentwicklung erreicht. Um den Tabakstrom 15 vollständig der Rutsche 20 zuzuführen, ist am anderen Ende des Förderbandes 10 ein Leitblech 30 angeordnet, durch das gewährleistet ist, dass der abgeworfene Tabak 15 nicht im freien Fall in den Zwischenspeicher ZS fällt, sondern zur Rutsche 20 gelangt.

Um eine vollständige und gleichmäßige Befüllung einer Mischbox bzw. des Zwischenspeichers ZS mit Tabak 15 zu erreichen, ist das Förderband 10 in Bezug auf den Zwischenspeicher ZS verfahrbar angeordnet. Erfindungsgemäß ist vorgesehen, dass das Förderband 10 und die Rutsche 20 miteinander verbunden sind, so dass die Rutsche 20 ebenfalls und gemeinsam mit dem Förderband 10 bewegt wird, um den Zwischenspeicher ZS vollständig bis zur Füllhöhe gleichmäßig zu befüllen.

### Bezugszeichenliste

- 10: Förderband
- 12: Abwurfbereich
- 15: Tabak
- 20: Rutsche
- 22.1 bis 22.4: Rutschsegmente
- 30: Leitblech
- ZS: Zwischenspeicher
- FH: Füllhöhe

## Patentansprüche

1. Einrichtung zum Befüllen eines Zwischenspeichers (ZS) mit Tabak (15), umfassend eine Fördereinrichtung (10) zum Fördern des Tabaks (15) zum Zwischenspeicher (ZS), **dadurch gekennzeichnet, dass** eine Rutscheinrichtung (20) zum Einbringen des Tabaks (15) in den Zwischenspeicher (ZS) vorgesehen ist.

2. Einrichtung nach Anspruch 1, **dadurch gekennzeichnet, dass** die Rutscheinrichtung (20) im Abwurfbereich des Tabaks (15) von der Fördereinrichtung (10) angeordnet ist.

3. Einrichtung nach Anspruch 2, **dadurch gekennzeichnet, dass** die Rutscheinrichtung (20) dem Abwurfbereich der Fördereinrichtung (10) beabstandet gegenüber angeordnet ist.

4. Einrichtung nach einem der Ansprüche 1 bis 3, **dadurch gekennzeichnet, dass** die Rutscheinrichtung (20) schwenkbar ist.

5. Einrichtung nach einem oder mehreren der Ansprüche 1 bis 4, **dadurch gekennzeichnet, dass** die Rutscheinrichtung (20) in ihrer Länge verstellbar und/oder einstellbar ist.

6. Einrichtung nach einem oder mehreren der Ansprüche 1 bis 5, **dadurch gekennzeichnet, dass** die Rutscheinrichtung (20) teleskopierbar ist.

7. Einrichtung nach einem oder mehreren der Ansprüche 1 bis 6, **dadurch gekennzeichnet, dass** die Rutscheinrichtung (20) mehrere, insbesondere flächenartig ausgebildete, Rutschsegmente (22.1 bis 22.4) aufweist.

8. Einrichtung nach einem oder mehreren der Ansprüche 1 bis 7, **dadurch gekennzeichnet, dass** die Rutscheinrichtung (20) gegen die Förderrichtung des Tabaks (15) geneigt ausgebildet ist, so dass die Rutscheinrichtung (20) im unteren Bereich zur Fördereinrichtung (10) gerichtet ist.

9. Einrichtung nach einem oder mehreren der Ansprüche 1 bis 8, **dadurch gekennzeichnet, dass** die Rutscheinrichtung (20) einen Neigungswinkel zwischen 0° und 30° aufweist.

10. Einrichtung nach einem oder mehreren der Ansprüche 1 bis 9, **dadurch gekennzeichnet, dass** an der Fördereinrichtung (10) eine Leiteinrichtung (30) für den abgeworfenen Tabak (15) vorgesehen ist.

11. Einrichtung nach Anspruch 10, **dadurch gekennzeichnet, dass** die Leiteinrichtung (30) als gegen die Rutscheinrichtung (20) gerichtetes, geneigtes Flächenelement ausgebildet ist.

12. Einrichtung nach einem oder mehreren der Ansprüche 1 bis 11, **dadurch gekennzeichnet, dass** die Fördereinrichtung (10) und die Rutscheinrichtung (20) als Einheit ausgebildet sind.

13. Einrichtung nach einem oder mehreren der Ansprüche 1 bis 12, **dadurch gekennzeichnet, dass** die Fördereinrichtung (10) und/oder die Rutscheinrichtung (20) verfahrbar sind.

14. Verwendung einer Rutscheinrichtung (20) zum Einbringen von Tabak (15) in einen Zwischenspeicher (ZS) in einer Einrichtung zu Befüllen des Zwischenspeichers (ZS) mit Tabak (15), umfassend eine Fördereinrichtung (10) zum Fördern des Tabaks (15) zum Zwischenspeicher (ZS), nach einem oder mehreren der Ansprüche 1 bis 13.
